# EUROPEAN PATENT APPLICATION

(11) **EP 4 002 573 A1**
(43) Date of publication of application: **25.05.2022**
(21) Application number: 21209032.8
(22) Date of filing: 18.11.2021
(51) Int. Cl.: H01M 50/411, H01M 50/434, H01M 50/443, H01M 50/446, H01M 50/449, H01M 10/0525

(54) **COATED BOEHMITE PARTICLES FOR BATTERY SEPARATORS**

(30) Priority: 19.11.2020 US 202063116037 P
(71) Applicant: SolarEdge Technologies Ltd., 4673335 Herzeliya (IL)
(72) Inventor: BURSHTAIN, Doron, 4673335 Herzeliya (IL)
(74) Representative: V.O.

(57) **Abstract**

Boehmite particles are coated with an inorganic hydroxide (such as silicon hydroxide), a full graphene oxide, an inorganic electron donor, or the like, forming a core-shell particle. A boehmite particle (core) with a smallest particle dimension of between 40 nanometer (nm) and 400 micrometers (microns) may be coated with a layer of inorganic hydroxide material (shell), where the layer is between 0.5 nm and 1 micron thick. A second layer may be applied to cover most of the first layer to modify the surface properties of the first layer and facilitate the incorporation of the particles into a lithium ion battery separator. The resulting particles may have improved manufacturing and storage properties.

## Description

### BACKGROUND

The present disclosure relates to the field of materials, and devices, containing boehmite.

Boehmite is a thermally-conductive and electrically-resistive material used for a variety of applications from food industries, cosmetics, electronics, and energy storage.

### SUMMARY

The following summary is a short summary of some of the inventive concepts and is for illustrative purposes only, is not an extensive overview, and is not intended to identify key or critical elements, or to limit or constrain the inventions and examples in the detailed description. One skilled in the art will recognize other novel combinations and features from the detailed description.

Boehmite core particles are coated with an inorganic hydroxide (such as silicon hydroxide), inorganic oxides (such as silicon oxide), an inorganic oxide with hydroxide edges, a full graphene oxide, an inorganic electron donor, an inorganic electron acceptor, or the like, forming a core-shell particle. For example, a boehmite particle (core) with a smallest particle dimension value of between 40 nanometers (nm) and 25 micrometers (microns) is coated with a layer of inorganic hydroxide material (shell), wherein the layer is between 0.5 nm and 1 micron thick. The core particle may have an approximate spherical shape, such as a sphere of mean diameter equal to the smallest particle dimension. A non-spherical particle may have an oblong or oblate shape, where the smallest particle dimension is the shortest dimension. The particle may have an aspect ratio of up to 1:1000, such as an oblate flake with a 40 nm thickness and a 40 micron size in the other two dimensions (of the three dimensions: width, length and height). A second layer or coating may be applied to the first coating layer to modify the surface properties of the composite particle. The resulting particles have improved manufacturing and storage properties, as well as improved viscosity stability and wetting properties over time.

As noted above, this Summary is merely a summary of some of the features described herein. It is not exhaustive, and it is not to be construed as a limitation of the claims annexed hereto.

### BRIEF DESCRIPTION OF THE DRAWINGS

The foregoing, and other features, aspects, and advantages of the present disclosure will become better understood with regard to the following description, claims, and drawings. The present disclosure is illustrated by way of example, and not limited by, the accompanying figures. In the drawings, like numerals reference similar elements.
FIG. 1A shows an exemplary boehmite particle with a primary shell and secondary modification coating.
FIG. 1B shows exemplary separators including boehmite particles with a primary shell and secondary modification coating.
FIG. 1C shows an exemplary lithium ion battery with a separator including boehmite particles with a primary shell and secondary modification coating.
FIG. 2 shows a flowchart of a method of manufacturing a separator with boehmite particles that have a shell and second coating.

### DETAILED DESCRIPTION

The accompanying drawings, which form a part hereof, show examples of the present disclosure. It is to be understood that the examples shown in the drawings and/or discussed herein are non-exclusive and that there are other examples of how the disclosure may be practiced.

Separators for lithium-ion batteries (LIBs) may comprise layers of different polyolefin materials, such as polyethylene (PE), polypropylene (PP), or their blends. For example, a multilayer separator may comprise a PE-PP bi-layer or a PP-PE-PP tri-layer (as these may exhibit a shut-down effect). For example, a separator layer of PE, which has a melting point of around 130°C, may close its pores and stop the electrochemical reactions above 130°C, and the higher melting point of PP (such as 165°C) may assist in preserving the mechanical integrity of the separator to avoid contact between the electrodes above 130°C. However, at temperatures higher than 165°C, such as may arise during nail penetration or overcharge at a high current density, all layers of the separator may shrink or even melt, which may result in a physical and electronic contact of the electrodes and thus, a thermal runaway.

To improve the thermal stability of separators for LIBs, inorganic materials with high melting points may be used as layers or for the complete separator. These inorganic composite separators may reduce shrinkage and may have improved wettability. Boehmite is a modification of aluminum oxide hydroxide (AlOOH) which may be thermally stable up to temperatures higher than 200°C. A distribution of boehmite micron- and/or submicron-sized particles may be used as a filler or layer of the separator. To adhere the boehmite better to the separator, a layer of a first material (such as an oxide ceramic, sulfide, nitride, carbide, boride, phosphate, etc.) may surround the boehmite to create a composite particle and provide a better adhesion to the separator material. A polymer or binder may be applied to the composite particles to adhere the composite particles to the separator. For example, by surface modification of a first layer surrounding the boehmite with alkylbenzyl sulfonic acids, a stable distribution of boehmite particles may be achieved in the separator. Appropriate solvent mixtures may be used for manufacturing the inorganic separators by a coating and drying process.

When binding ceramics to a polymer, a surface treatment may be performed by inducing chemical or physical bonds between the ceramic particles and the separator layer. These surface modifications may assist in changing overall properties of the particle or determining a certain target property. For example, use of monosaccharides may achieve a stable slurry dispersion and may lead to better homogeneity of the slurry on the substrate area (such as a layer of slurry on the separator substrate).

Coating boehmite sub-micron- and micron-sized particles may preserve the volume of the boehmite particle, while modifying the physical and chemical properties of the particle surface according to the application. For example, coating with an inorganic hydroxide may preserve the volume of boehmite during manufacturing. For example, a sacrificial coating may allow better dispersion and binding to polymers in ceramic- and/or ceramic-coated separators. A coated boehmite particle may be referred to herein as a core-shell particle, where the shell is applied to the core by a physical or chemical coating process.

As used herein, the terms shell, layer, and coating are used interchangeably and mean a covering of a material applied to the surface of an inner material particle, such as a substrate. As used herein, the term chemical coating means adhering the shell or coating to a substrate using a chemical bond created between the coating material and the substrate. As used herein, a chemical bond means a sharing or transfer of electrons between bound atoms, such as ionic bonds, covalent bonds, and metallic bonds. As used herein, the term physical coating means adhering the shell or coating to a substrate using a physical bond created between the coating material and the substrate. As used herein, the term physical bond means a force between two atoms where no sharing or transfer of electrons exists between the bound atoms, such as bonds created by van der Waals forces, columbic forces, gravitational forces, or compressive/encapsulation forces.

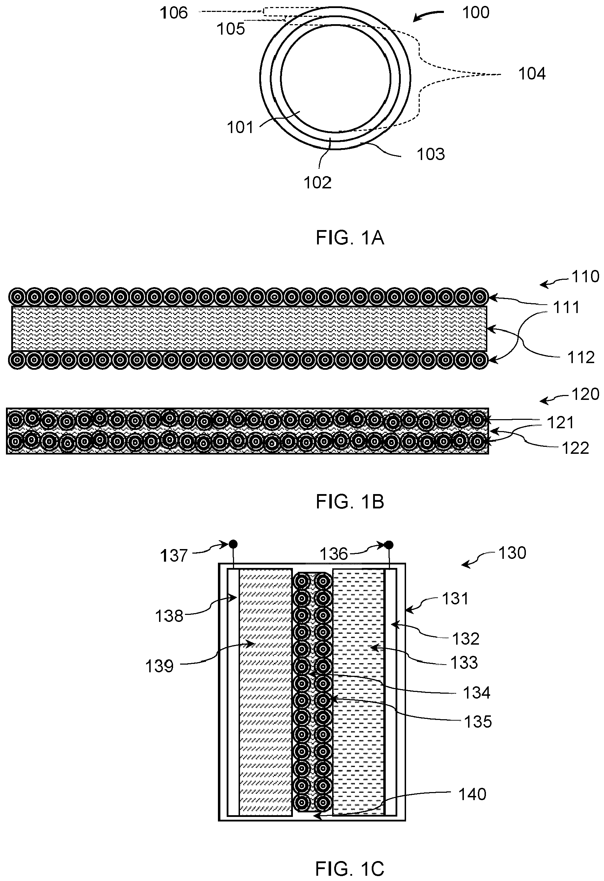

Reference is now made to FIG. 1A, which shows an exemplary boehmite core-shell particle 100 with a primary coating and secondary modification coating. A core boehmite particle 101 is coated physically and/or chemically with a second material 102, such as a temperature resistant material, and may be further modified with a secondary coating 103, such as a processing modification material. The exemplary illustration depicts the boehmite particle as an approximate sphere, but it is recognized that the shape of the particle may be different, such as an oblong or an oblate irregular shape. In the spherical analogy, the core may have a diameter 104 (or a smallest particle dimension 104 in the case of non-spherical particles), with a value such as between 40 nanometer (nm) and 25 micrometers (microns). The first coating layer may have a thickness 105 of between 0.5 nm and 1 micron. For example, the first coating layer is a monolayer covering the majority of the core boehmite particle (>50% of the core surface area). The second coating layer may have a thickness 106 of between 0.5 nm and 1 micron and may be continuous or discontinuous. For example, the second coating layer may cover at least 25% of the surface of the first coating layer. When processing a slurry containing the particles, the primary 102 and secondary 103 coatings may preserve stability of the slurry properties during manufacturing. As noted above, the first and second coating layers may be continuous or non-continuous.

Particles may be shaped to adhere to the separator substrate, for layering of the particles on the substrate, for incorporation thereof into the substrate material as a filler, or the like. For example, the particles shown in the figures are symbolically represented by circles or spheres, but this representation is exemplary and the actual three-dimensional shape may be as flakes, irregular shaped particles, rods, filaments, or the like. Composite particles may, for example, be shaped as flakes comprising a thickness equal to the smallest particle dimension value (of between 40 nm to 25 microns). Composite particles may, for example, comprise irregular shapes but have a smallest particle dimension value (of 40 nm to 25 microns), such as the short dimension of each particle, and a largest particle dimension value of 40 nm to 400 microns (in the other two of three dimensions: width, height, and length), thereby allowing aspect ratios of from 1:1 to 1:10000. For example, composite particles may comprise one short dimension (smallest particle dimension) and two long dimensions (each having a similar largest particle dimension value of 40 nm to 400 microns), such as a flake or oblate shape. Composite particles may, for example, comprise two short dimensions (smallest particle dimension) and one long dimension (having a largest particle dimension value of 40 nm to 400 microns), such as a rod, filament, or oblong shape.

The particle size and shape may be measured using a laser diffraction method or an image analysis method configured to the size and shape of the designed particles. For example, laser diffraction of particles can be performed with a Fritsch ANALYSETTE 22 NeXT Nano, a Fritsch ANALYSETTE 22 NeXT Micro, a Beckman Coulter LS 13 320 XR Particle Size Analyzer, a Malvern Panalytical Mastersizer 3000, a Malvern Panalytical Zetasizer Pro, a Malvern Panalytical NanoSight NS300, a HORIBA Partica LA-960V2, a Microtrac S3500, a Microtrac BLUEWAVE, a Sympatec HELOS, or the like. For example, ISO 13320:2020 describes the requirements for laser diffraction methods, as well as instrument qualification and size distribution measurement standards. Laser diffraction methods may determine the particle size distribution of spherical particles, and the spherical equivalent size distributions for non-spherical particles. A report from one of the above mentioned laser diffraction analyzers may produce a frequency versus size distribution of particles which, when fitted with a curve, may determine the accumulate percentage versus size curve. The measurements or the fitted curve may determine the 5th percentile size (the inclusive size limit of the 5% smallest particles), the 50th percentile size (median), and the 95th percentile. For example, a distribution of spherical particles may have a median size of 5 microns, a 5th percentile size of 2.5 microns, and a 95th percentile size of 10 microns. A 5th percentile size of a sample of particles may be used, for example, to quantify the smallest particle dimension. A 95th percentile size of a sample of particles may be used, for example, to quantify the largest particle dimension.

When non-spherical particle distributions are characterized, an image analysis method may be used to determine distributions of particle size and particle shape. For example, two-dimensional (2D) image analysis of particles can be performed using a Malvern Panalytical NanoSight NS300, a Fritsch ANALYSETTE 28 ImageSizer, a Microtrac SYNC, a Sympatec QIPIC, a Sympatec PICTOS, a HORIBA PSA300, or the like. For example, three-dimensional (3D) image analysis of particles may be performed with an electron tomography device. For example, a device for image analysis of particles may comply with "ISO 13322-1:2014 Particle size analysis - Image analysis methods - Part 1: Static image analysis methods" or "ISO 13322-2:2006 Particle size analysis - Image analysis methods - Part 2: Dynamic image analysis methods" depending on the analysis method used.

Measurement of smallest particle dimension and largest particle dimension of a distribution of particles may be performed using image analysis methods. For example, measuring the minimum Feret diameter (Fmin) and the maximum Feret diameter (Fmax) for each particle of a sample of particles (such as for between 100 to 10,000 particles), may give the distribution of smallest particle dimension sizes, the largest particle dimension sizes, and the aspect ratio between them. A bounding rectangle analysis method may be used to determine an aspect ratio of particle shape. For example, a Feret diameter (F90) is measured in perpendicular direction to the Fmin direction and the ratio between Fmin and F90 is the aspect ratio. For example, if the median Fmin is 2 microns and the median F90 is 20 microns, the median aspect ratio is 2/20 = 0.1. Three-dimensional (3D) image analysis, such as using electron tomography, may provide a three dimensional shape analysis, such if a distribution of particles can be described as an oblong shape or an oblate shape. Similar to the bounding rectangle analysis of a 2D image, a 3D image may be analyzed to determine a bounding square parallelepiped (BSP). To compute the BSP for a particle, the Fmin for each particle is measured, and a perpendicular plane to the Fmin direction that has the largest particle area is analyzed with a bounding rectangle as in the 2D method. The resulting measurements in the perpendicular plane of Fmin (Fminpp) and a Feret diameter perpendicular to Fminpp (F90pp), along with Fmin, can be used to determine if the particle is oblate or oblong. For example, when Fminpp is closer in value to Fmin than to F90pp, the particle can be considered oblong (such as rod-shaped). For example, when Fminpp is closer in value to F90pp than to Fmin, the particle can be considered oblate (such as flake-shaped).

As used herein, the term smallest particle dimension refers to the size of the Fmin of each particle. For example, when the particle size is measured as a length, width, and height (such as by a bounding square parallelepiped), the smallest of these values will be the smallest particle dimension. When a collection of particle sizes is measured, there may be a distribution of particle sizes between a lower range limit and an upper range limit. For example, a collection of particles may have a distribution of sizes, where the distribution may be described by a lower limit and an upper limit of the sizes. As used herein, the value of the smallest particle dimension value refers to the value of the smallest dimension of 95% of the particles. For example, when a sample of particles is measured and there exists for each particle a smallest dimension (Fmin), the smallest particle dimension is the 5th percentile of the distribution of all Fmins of particles (such that 95% of the particle smallest dimensions are greater than the smallest particle dimension). Similarly, the largest particle dimension is the largest dimension of each particle and the value of the largest particle dimension value is the value for which 95% of the particles have a largest particle dimension smaller than or equal to the value (95th percentile).

The composite particles may have a second layer selectively applied to part of the surface of the composite particle, such as between 25% to 100% of the surface of each particle. For example, only one side of an oblate composite particle is coated with the second layer. For example, the second layer is only distributed across part of the composite particle. In some examples of separator materials and first layer material selections, a second layer is not required to adhere the boehmite particles to the separator. For example, the composite particle may not require a second layer.

Reference is now made to FIG. 1B, which shows exemplary separators 110 and 120 including boehmite particles with a primary shell and secondary modification coating. Separator 110 includes boehmite particles 111 (such as, for example, particles 100 of FIG. 1A) on the surface of a polymer separator substrate 112. For example, the particles 111 are attached to the surface of substrate 112 using a binder, adhesive, or resin. For example, a slurry including particles 111 is applied to one or both surfaces of substrate 112, and a drying process is used to adhere the particles 111 to the surface of the substrate 112. Separator 120 includes boehmite particles 121 (such as, for example, particles 100 of FIG. 1A or particles 111) incorporated internally of the separator 122. For example, the separator may include an open foam configuration of a polymer material, and the slurry of particles 121 is applied to the foam structure so that the particles coat the inner surfaces of the substrate 122. For example, the substrate is manufactured from a polymer with the particles 121 included in the polymer material of the separator. In some cases, the boehmite particles are distributed both as a filler within the separator material and as a layer on the surface of the separator.

Reference is now made to FIG. 1C, which shows an exemplary lithium ion battery 130 with a separator including boehmite particles with a primary shell and secondary modification coating. The battery 130 includes a case 131. The battery 130 includes an anode current collector 132 and an anode active material layer 133. A negative terminal 136 is electrically connected to the anode current collector 132. The battery 130 includes a cathode current collector 138 and a cathode active material layer 139. A positive terminal 137 is electrically connected to the anode current collector 138. A separator 134 comprises boehmite particles 135, such as, for example, the particles 100 of FIG. 1A. An electrolyte solution 140 is disposed inside the case 131 and infuses the anode active material 133, the cathode active material 139, and the separator 134.

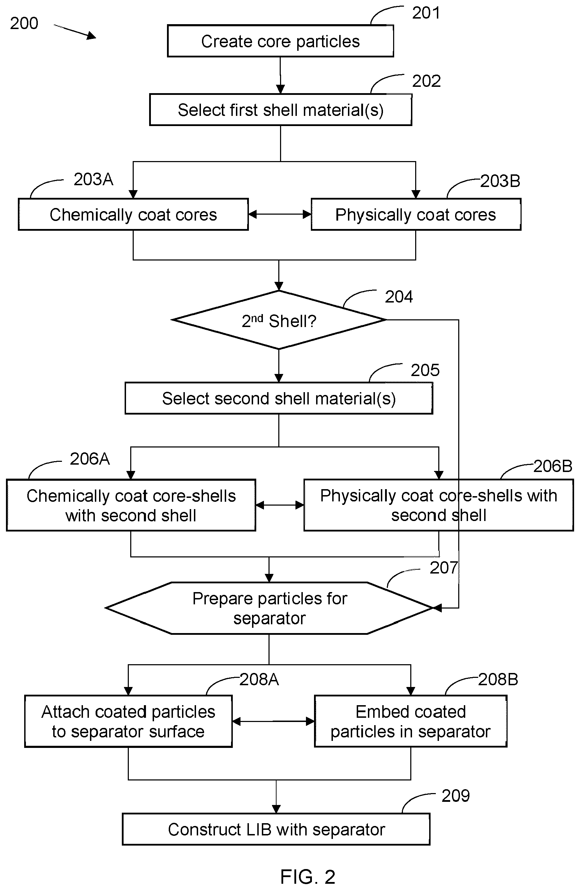

Reference is now made to FIG. 2, which shows a flowchart 200 of a method for coating a boehmite particle, as well as a method of manufacturing a separator with so-coated boehmite particles. Boehmite core particles may be created in step 201 to a specific size for incorporation in the separator. For example, a NOBILTA NOB dry particle-composing machine is used to form spherical particles to a 5 micron diameter at a first machine configuration. A first shell material may be selected at step 202. The selected first shell material may be physically applied (as at step 203B) to the boehmite core. For example, a first material of TiO₂ is selected and processed to a 100 nm particle size using the NOBILTA NOB dry particle-composing machine. The TiO₂ 100 nm particles are combined with the boehmite core particles of 5 micron size and processed in the NOBILTA NOB to create a 0.5 micron coating thickness surrounding the boehmite core. The selected first shell material may be chemically applied (as at step 203A) to the boehmite core. For example, a 0.7 micron thick SiO₂ layer is applied to 12 micron size boehmite core particles using a Stöber process. The first shell material may be physically and/or chemically coated around the boehmite core. For example, a combined chemical and physical coating process is used to apply a coating to a boehmite particle, such as using an Eirich Cleanline C5 mixing and coating machine. When an optional second shell is designed at step 204, a secondary modification material may be selected (as at step 205). The selected second shell material may be physically applied (as at step 206B) to the core-shell particle. For example, the boehmite core particle with a 0.5 micron TiO₂ layer is coated with a thin film of D-Glucose (for example, 0.1 micron thick) using a physical vapor deposition or sputtering process. The selected second shell material may be chemically applied (as at step 206A) to the core-shell particle. For example, a boehmite core particle with a 0.4 micron ZiO₂ layer is coated with a thin film of alkylbenzene sulfonic acid using a chemical vapor deposition process. In some instances, a combined chemical and physical coating process may be used. Once the composite core-shell particles (such as single- or dual-shell composite particles) have been manufactured, they can be prepared 207 for use in a separator. The composite particles are attached 208A on a surface of a separator substrate, embedded 208B in the separator structure, or both attached 208A on the surface and embedded 208B in the structure. A lithium ion battery (LIB) may be constructed 209 from the separator including boehmite particles.

The boehmite particle may be coated with another ceramic material or non-ceramic material (exemplary materials are listed in TABLE 1 and TABLE 2). Some of the coatings having a hydroxyl group may bind directly to some polymers, such as PE and PP. Other coating materials may be selected to have a desired group for binding to the polymer material of the separator. The boehmite particle coating material(s) may change the viscosity, stability and homogeneity of the boehmite layer of the separator to produce a separator with improved thermal runaway protection.

**TABLE 1: Exemplary primary coating materials:**

| **Type** | **Material** |
|---|---|
| Oxide ceramics | TiO₂, |
| | SiO₂, |
| | ZiO₂, |
| | Spinels, such as MgAl₂O₄ |
| | Perovskites, such as CaTiO₃ or comprising the general formula ABO₃, where A and B are two different cations |
| | Garnets, such as minerals comprising the formula X₃Y₂(SiO₄)₃, where the X site is usually occupied by divalent cations M²⁺ (M = Ca, Mg, Fe, or Mn) and the Y site by trivalent cations M³⁺ (M = Al, Fe, or Cr) |
| | Alumina (such as, d-alumina, g-alumina and their mixtures) + secondary modifications |
| Chalcogenides | Binary sulfides, such as Bi₂S₃, Cu₂₋ₓS (0 < x < 1), PbS, TiS₂, and Ag₂S |
| | Selenides |
| | Tellurides |
| Nitrides and oxynitrides | Binary nitrides, such as sulfur nitrides and sulfur oxynitrides |
| | Boron nitrite |
| | Triphosphorous pentanitride |
| | Silicon nitrides |
| | Titanium nitrides |
| | Zinc nitrides |
| | Aluminum nitrides |
| Carbides and borides | Silicon carbide |
| | Titanium carbide |
| | Transition- and heavy metal borides, such as WB₄, AlB₂, TiB₂ |
| | Titanium diboride |
| | Iron Boride |
| Phosphates | Mono-phosphates |
| | Poly-phosphates |

**TABLE 2: Exemplary secondary modification coating materials:**

| **Type** | **Material** |
|---|---|
| Surfactants | Alkylbenzene sulfonic acid |
| Monosaccharides and their derivatives | D-Glucose |
| | 3-o-methyl-d-glucose |
| | D-fructose |
| | 1 -o-methyl-d-fructose |
| | 3 -o-methyl-d-fructose |
| Disaccharides | Saccharose |
| | Turanose |
| | Maltose |
| Sugar Acids | Galacturonic acid |
| | Lactobionic acid |
| | L-ascorbic acid |
| Amino sugars | Glucosamine, |
| | Galactosamine |
| Deoxy sugars | Deoxyribose |
| | Fuculose |
| Polyol sugar alcohols | Xylitol |
| | Mannitol |
| | Sorbitol |
| Others | Methylcellulose |
| | Catboxymethylcellulose |
| | Acrylic acid |
| | Ethylene oxide |

The primary coating material (TABLE 1) and secondary modifications material (TABLE 2) may lead to a better dispersion of the slurry during manufacturing. For example, the first layer of the primary coating material may assist in preserving the bulk properties of the particles and the secondary coating material may provide better dispersion of the particles (such as when using a slurry or suspension to distribute the particles) on the surface of an LIB separator. A substantially uniform particle size may result in a narrow monomodal pore size distribution, as may be used for separators.

In a first example applying the systems and methods described herein, nanoparticles of titanium oxide (TiO₂) may be applied by mechanical means (comprising resulting physical and chemical bonds between the substrate and coating material) on boehmite to form a core-shell particle. A water-based dispersion is prepared for coating a polyethylene separator film with the boehmite particles, which may maintain the slurry at a correct pH where the zeta-potential of the core-shell particles may be close to 0. This may force the surface of the TiO₂ particles to be with hydroxide group (-OH) and may allow binding, for example, with polyvinyl alcohol (PVA), polyolefin, polyethylene oxide (PEO), polypropylene (PP), polyvinyl pyrrolidone (PVP), or carboxymethyl cellulose (CMC).

In a second example applying the systems and methods described herein, nanoparticles of titanium oxide (TiO₂) and/or alumina (Al₂O₃) may be applied by mechanical (physical and chemical) means on boehmite to form a core-shell particle. The resulting core-shell particle may then be exposed to 1-o-methyl-d-fructose as a deflocculant in the slurry where the percentage of the alumina or the titanium oxide may be 10-60% in volume, and the content of the monosaccharide may be 1%-10%. The result may have a very stable suspension and may react with the binding polymers due to availability of carbohydrate groups in the monosaccharide.

Core-shell particles as produced in the above examples may be coated with d-glucose or 1-o-methyl-d-fructose to produce a slurry with a stable viscosity over time for stable handling during manufacturing.

Here, as elsewhere in the specification and claims, ranges may be combined to form larger ranges.

Specific dimensions, specific materials, specific ranges, specific resistivities, specific voltages, specific shapes, and/or other specific properties and values disclosed herein are exemplary in nature and do not limit the scope of the present disclosure. The disclosure herein of particular values and particular ranges of values for given parameters are not exclusive of other values and ranges of values that may be useful in one or more of the examples disclosed herein. Moreover, it is envisioned that any two particular values for a specific parameter stated herein may define the endpoints of a range of values that may be suitable for the given parameter (for example, the disclosure of a first value and a second value for a given parameter can be interpreted as disclosing that any value between the first and second values could also be employed for the given parameter). For example, if parameter X is exemplified herein to have value A and also exemplified to have value Z, it is envisioned that parameter X may have a range of values from about A to about Z. Similarly, it is envisioned that disclosure of two or more ranges of values for a parameter (whether such ranges are nested, overlapping or distinct) subsume all possible combination of ranges for the value that might be claimed using endpoints of the disclosed ranges. For example, if parameter X is exemplified herein to have values in the range of 1-10, or 2-9, or 3-8, it is also envisioned that parameter X may have other ranges of values including 1-9, 1-8, 1-3, 1-2, 2-10, 2-8, 2-3, 3-10, and 3-9.

In the description of various illustrative features, reference is made to the accompanying drawings, which form a part hereof, and in which is shown, by way of illustration, various features in which aspects of the disclosure may be practiced. It is to be understood that other features may be utilized and structural and functional modifications may be made, without departing from the scope of the present disclosure.

Terms such as "multiple" as used in this disclosure indicate the property of having or involving several parts, elements, or members.

It may be noted that various connections are set forth between elements herein. These connections are described in general and, unless specified otherwise, may be direct or indirect; this specification is not intended to be limiting in this respect, and both direct and indirect connections are envisioned. Further, elements of one feature in any of the embodiments may be combined with elements from other features in any of the embodiments, in any combinations or sub-combinations.

All described features, and modifications of the described features, are usable in all aspects of the inventions taught herein. Furthermore, all of the features, and all of the modifications of the features, of all of the embodiments described herein, are combinable and interchangeable with one another.

### Clauses:

Clause 1: a composite material particle comprising a boehmite core and a first shell comprising an oxide ceramic.
Clause 1A: the composite material particle of clause 1, wherein the oxide ceramic comprises at least one of TiO₂, SiO₂, ZiO₂, spinels, MgAl₂O₄, perovskites, CaTiO₃, ABO₃ where A and B are two different cations, garnets, minerals comprising the formula X₃Y₂(SiO₄)₃ where X is a divalent cation M²⁺ (M = Ca, Mg, Fe, or Mn) and Y is a trivalent cation M³⁺ (M = Al, Fe, or Cr), alumina, d-alumina, and g-alumina.
Clause 1B: the composite material particle of clause 1, wherein the smallest particle dimension value of the boehmite core is between 40 nanometers and 25 micrometers.
Clause 1C: the composite material particle of clause 1, wherein the largest particle dimension value of the boehmite core is between 40 nanometers and 400 micrometers.
Clause 1D: the composite material particle of clause 1, wherein the thickness of the first shell is between 0.5 nanometers and 2 micrometers.
Clause 1E: the composite material particle of clause 1, further comprising a second shell completely or partially surrounding the first shell, wherein the second shell comprises at least one of a surfactant, a monosaccharide, a disaccharide, a sugar acid, an amino sugar, a deoxy sugar, a polyol sugar alcohol, and a methylcellulose.
Clause 1F: the composite material particle of clause 1E, wherein the thickness of the second shell is between 0.5 nanometers and 2 micrometers.
Clause 1G: the composite material particle of clause 1, further comprising a second shell completely or partially surrounding the first shell, wherein the second shell comprises at least one of alkylbenzene sulfonic acid, D-glucose, 3-o-methyl-d-glucose, D-fructose, 1-o-methyl-d-fructose, 3-o-methyl-d-fructose, saccharose, turanose, maltose, galacturonic acid, lactobionic acid, 1-ascorbic acid, glucosamine, galactosamine, deoxyribose, fuculose, xylitol, mannitol, sorbitol, methylcellulose, catboxymethylcellulose, acrylic acid, and ethylene oxide.
Clause 1H: the composite material particle of clause 1G, wherein the thickness of the second shell is between 0.5 nanometers and 2 micrometers.
Clause 2: a composite material particle comprising a boehmite core and a first shell comprising a chalcogenide.
Clause 2A: the composite material particle of clause 2, wherein the chalcogenide comprises at least one of a binary sulfide, Bi₂S₃, Cu₂₋ₓS (0 < x < 1), PbS, TiS₂, Ag₂S, a selenide, and a telluride.
Clause 2B: the composite material particle of clause 2, wherein the smallest particle dimension value of the boehmite core is between 40 nanometers and 25 micrometers.
Clause 2C: the composite material particle of clause 2, wherein the largest particle dimension value of the boehmite core is between 40 nanometers and 400 micrometers.
Clause 2D: the composite material particle of clause 2, wherein the thickness of the first shell is between 0.5 nanometers and 2 micrometers.
Clause 2E: the composite material particle of clause 2, further comprising a second shell completely or partially surrounding the first shell, wherein the second shell comprises at least one of a surfactant, a monosaccharide, a disaccharide, a sugar acid, an amino sugar, a deoxy sugar, a polyol sugar alcohol, and a methylcellulose.
Clause 2F: the composite material particle of clause 2E, wherein the thickness of the second shell is between 0.5 nanometers and 2 micrometers.
Clause 2G: the composite material particle of clause 2, further comprising a second shell completely or partially surrounding the first shell, wherein the second shell comprises at least one of alkylbenzene sulfonic acid, D-glucose, 3-o-methyl-d-glucose, D-fructose, 1-o-methyl-d-fructose, 3-o-methyl-d-fructose, saccharose, turanose, maltose, galacturonic acid, lactobionic acid, 1-ascorbic acid, glucosamine, galactosamine, deoxyribose, fuculose, xylitol, mannitol, sorbitol, methylcellulose, catboxymethylcellulose, acrylic acid, and ethylene oxide.
Clause 2H: the composite material particle of clause 2G, wherein the thickness of the second shell is between 0.5 nanometers and 2 micrometers.
Clause 3: a composite material particle comprising a boehmite core and a first shell comprising a nitride.
Clause 3A: the composite material particle of clause 3, wherein the nitride comprises at least one of a binary nitride, a sulfur nitride, a boron nitrite, a triphosphorous pentanitride, a silicon nitride, a titanium nitride, a zinc nitride, and an aluminum nitride.
Clause 3B: the composite material particle of clause 3, wherein the smallest particle dimension value of the boehmite core is between 40 nanometers and 25 micrometers.
Clause 3C: the composite material particle of clause 3, wherein the largest particle dimension value of the boehmite core is between 40 nanometers and 400 micrometers.
Clause 3D: the composite material particle of clause 3, wherein the thickness of the first shell is between 0.5 nanometers and 2 micrometers.
Clause 3E: the composite material particle of clause 3, further comprising a second shell completely or partially surrounding the first shell, wherein the second shell comprises at least one of a surfactant, a monosaccharide, a disaccharide, a sugar acid, an amino sugar, a deoxy sugar, a polyol sugar alcohol, and a methylcellulose.
Clause 3F: the composite material particle of clause 3E, wherein the thickness of the second shell is between 0.5 nanometers and 2 micrometers.
Clause 3G: the composite material particle of clause 3, further comprising a second shell completely or partially surrounding the first shell, wherein the second shell comprises at least one of alkylbenzene sulfonic acid, D-glucose, 3-o-methyl-d-glucose, D-fructose, 1-o-methyl-d-fructose, 3-o-methyl-d-fructose, saccharose, turanose, maltose, galacturonic acid, lactobionic acid, 1-ascorbic acid, glucosamine, galactosamine, deoxyribose, fuculose, xylitol, mannitol, sorbitol, methylcellulose, catboxymethylcellulose, acrylic acid, and ethylene oxide.
Clause 3H: the composite material particle of clause 3G, wherein the thickness of the second shell is between 0.5 nanometers and 2 micrometers.
Clause 4: a composite material particle comprising a boehmite core and a first shell comprising an oxynitride.
Clause 4A: the composite material particle of clause 4, wherein the oxynitride comprises at least one of a binary oxynitride, a sulfur oxynitride, a silicon oxynitride, a titanium oxynitride, a zinc oxynitride, and an aluminum oxynitride.
Clause 4B: the composite material particle of clause 4, wherein the smallest particle dimension value of the boehmite core is between 40 nanometers and 25 micrometers.
Clause 4C: the composite material particle of clause 4, wherein the largest particle dimension value of the boehmite core is between 40 nanometers and 400 micrometers.
Clause 4D: the composite material particle of clause 4, wherein the thickness of the first shell is between 0.5 nanometers and 2 micrometers.
Clause 4E: the composite material particle of clause 4, further comprising a second shell completely or partially surrounding the first shell, wherein the second shell comprises at least one of a surfactant, a monosaccharide, a disaccharide, a sugar acid, an amino sugar, a deoxy sugar, a polyol sugar alcohol, and a methylcellulose.
Clause 4F: the composite material particle of clause 4E, wherein the thickness of the second shell is between 0.5 nanometers and 2 micrometers.
Clause 4G: the composite material particle of clause 4, further comprising a second shell completely or partially surrounding the first shell, wherein the second shell comprises at least one of alkylbenzene sulfonic acid, D-glucose, 3-o-methyl-d-glucose, D-fructose, 1-o-methyl-d-fructose, 3-o-methyl-d-fructose, saccharose, turanose, maltose, galacturonic acid, lactobionic acid, 1-ascorbic acid, glucosamine, galactosamine, deoxyribose, fuculose, xylitol, mannitol, sorbitol, methylcellulose, catboxymethylcellulose, acrylic acid, and ethylene oxide.
Clause 4H: the composite material particle of clause 4G, wherein the thickness of the second shell is between 0.5 nanometers and 2 micrometers.
Clause 5: a composite material particle comprising a boehmite core and a first shell comprising a carbide.
Clause 5A: the composite material particle of clause 5, wherein the carbide comprises at least one of silicon carbide and titanium carbide.
Clause 5B: the composite material particle of clause 5, wherein the smallest particle dimension value of the boehmite core is between 40 nanometers and 25 micrometers.
Clause 5C: the composite material particle of clause 5, wherein the largest particle dimension value of the boehmite core is between 40 nanometers and 400 micrometers.
Clause 5D: the composite material particle of clause 5, wherein the thickness of the first shell is between 0.5 nanometers and 2 micrometers.
Clause 5E: the composite material particle of clause 5, further comprising a second shell completely or partially surrounding the first shell, wherein the second shell comprises at least one of a surfactant, a monosaccharide, a disaccharide, a sugar acid, an amino sugar, a deoxy sugar, a polyol sugar alcohol, and a methylcellulose.
Clause 5F: the composite material particle of clause 5E, wherein the thickness of the second shell is between 0.5 nanometers and 2 micrometers.
Clause 5G: the composite material particle of clause 5, further comprising a second shell completely or partially surrounding the first shell, wherein the second shell comprises at least one of alkylbenzene sulfonic acid, D-glucose, 3-o-methyl-d-glucose, D-fructose, 1-o-methyl-d-fructose, 3-o-methyl-d-fructose, saccharose, turanose, maltose, galacturonic acid, lactobionic acid, 1-ascorbic acid, glucosamine, galactosamine, deoxyribose, fuculose, xylitol, mannitol, sorbitol, methylcellulose, catboxymethylcellulose, acrylic acid, and ethylene oxide.
Clause 5H: the composite material particle of clause 5G, wherein the thickness of the second shell is between 0.5 nanometers and 2 micrometers.
Clause 6: a composite material particle comprising a boehmite core and a first shell comprising a boride.
Clause 6A: the composite material particle of clause 6, wherein the boride comprises at least one of a transition metal boride, a heavy metal boride, WB₄, AlB₂, TiB₂, titanium diboride, and iron boride.
Clause 6B: the composite material particle of clause 6, wherein the smallest particle dimension value of the boehmite core is between 40 nanometers and 25 micrometers.
Clause 6C: the composite material particle of clause 6, wherein the largest particle dimension value of the boehmite core is between 40 nanometers and 400 micrometers.
Clause 6D: the composite material particle of clause 6, wherein the thickness of the first shell is between 0.5 nanometers and 2 micrometers.
Clause 6E: the composite material particle of clause 6, further comprising a second shell completely or partially surrounding the first shell, wherein the second shell comprises at least one of a surfactant, a monosaccharide, a disaccharide, a sugar acid, an amino sugar, a deoxy sugar, a polyol sugar alcohol, and a methylcellulose.
Clause 6F: the composite material particle of clause 6E, wherein the thickness of the second shell is between 0.5 nanometers and 2 micrometers.
Clause 6G: the composite material particle of clause 6, further comprising a second shell completely or partially surrounding the first shell, wherein the second shell comprises at least one of alkylbenzene sulfonic acid, D-glucose, 3-o-methyl-d-glucose, D-fructose, 1-o-methyl-d-fructose, 3-o-methyl-d-fructose, saccharose, turanose, maltose, galacturonic acid, lactobionic acid, 1-ascorbic acid, glucosamine, galactosamine, deoxyribose, fuculose, xylitol, mannitol, sorbitol, methylcellulose, catboxymethylcellulose, acrylic acid, and ethylene oxide.
Clause 6H: the composite material particle of clause 6G, wherein the thickness of the second shell is between 0.5 nanometers and 2 micrometers.
Clause 7: A material particle comprising a boehmite core and first shell comprising a phosphate.
Clause 7A: The material particle of clause 7, wherein the phosphate comprises at least one of a mono-phosphate and a poly-phosphate.
Clause 7B: the composite material particle of clause 7, wherein the smallest particle dimension value of the boehmite core is between 40 nanometers and 25 micrometers.
Clause 7C: the composite material particle of clause 7, wherein the largest particle dimension value of the boehmite core is between 40 nanometers and 400 micrometers.
Clause 7D: the composite material particle of clause 7, wherein the thickness of the first shell is between 0.5 nanometers and 2 micrometers.
Clause 7E: the composite material particle of clause 7, further comprising a second shell completely or partially surrounding the first shell, wherein the second shell comprises at least one of a surfactant, a monosaccharide, a disaccharide, a sugar acid, an amino sugar, a deoxy sugar, a polyol sugar alcohol, and a methylcellulose.
Clause 7F: the composite material particle of clause 7E, wherein the thickness of the second shell is between 0.5 nanometers and 2 micrometers.
Clause 7G: the composite material particle of clause 7, further comprising a second shell completely or partially surrounding the first shell, wherein the second shell comprises at least one of alkylbenzene sulfonic acid, D-glucose, 3-o-methyl-d-glucose, D-fructose, 1-o-methyl-d-fructose, 3-o-methyl-d-fructose, saccharose, turanose, maltose, galacturonic acid, lactobionic acid, 1-ascorbic acid, glucosamine, galactosamine, deoxyribose, fuculose, xylitol, mannitol, sorbitol, methylcellulose, catboxymethylcellulose, acrylic acid, and ethylene oxide.
Clause 7H: the composite material particle of clause 7G, wherein the thickness of the second shell is between 0.5 nanometers and 2 micrometers.
Clause 8: A material particle comprising a boehmite core and first shell comprising at least one of TiO₂, SiO₂, ZiO₂, spinels, MgAl₂O₄, perovskites, CaTiO₃, ABO₃ where A and B are two different cations, garnets, minerals comprising the formula X₃Y₂(SiO₄)₃ where X is a divalent cation M²⁺ (M = Ca, Mg, Fe, or Mn) and Y is a trivalent cation M³⁺ (M = Al, Fe, or Cr), alumina, d-alumina, g-alumina, a binary sulfide, Bi₂S₃, Cu₂₋ₓS (0 < x < 1), PbS, TiS₂, Ag₂S, a selenide, a telluride, binary nitride, a sulfur nitride, a boron nitrite, a triphosphorous pentanitride, a silicon nitride, a titanium nitride, a zinc nitride, an aluminum nitride, a binary oxynitride, a sulfur oxynitride, a silicon oxynitride, a titanium oxynitride, a zinc oxynitride, an aluminum oxynitride, silicon carbide, titanium carbide, a transition metal boride, a heavy metal boride, WB₄, AlB₂, TiB₂, titanium diboride, iron boride, mono-phosphates, and poly-phosphates.
Clause 8A: the composite material particle of clause 8, wherein the smallest particle dimension value of the boehmite core is between 40 nanometers and 25 micrometers.
Clause 8B: the composite material particle of clause 8, wherein the largest particle dimension value of the boehmite core is between 40 nanometers and 400 micrometers.
Clause 8C: the composite material particle of clause 8, wherein the thickness of the first shell is between 0.5 nanometers and 2 micrometers.
Clause 8D: the composite material particle of clause 8, further comprising a second shell completely or partially surrounding the first shell, wherein the second shell comprises at least one of a surfactant, a monosaccharide, a disaccharide, a sugar acid, an amino sugar, a deoxy sugar, a polyol sugar alcohol, and a methylcellulose.
Clause 8E: the composite material particle of clause 8D, wherein the thickness of the second shell is between 0.5 nanometers and 2 micrometers.
Clause 8F: the composite material particle of clause 8, further comprising a second shell completely or partially surrounding the first shell, wherein the second shell comprises at least one of alkylbenzene sulfonic acid, d-glucose, 3-o-methyl-d-glucose, d-fructose, 1-o-methyl-d-fructose, 3-o-methyl-d-fructose, saccharose, turanose, maltose, galacturonic acid, lactobionic acid, 1-ascorbic acid, glucosamine, galactosamine, deoxyribose, fuculose, xylitol, mannitol, sorbitol, methylcellulose, catboxymethylcellulose, acrylic acid, and ethylene oxide.
Clause 8G: the composite material particle of clause 8F, wherein the thickness of the second shell is between 0.5 nanometers and 2 micrometers.
Clause 9: a separator for a lithium ion battery comprising a layer of the composite material particles of any one clause of clauses 1, 1A-1H, 2, 2A-2H, 3, 3A-3H, 4, 4A-4H, 5, 5A-5H, 6, 6A-6H, 7, 7A-7H, 8, and 8A-8G.
Clause 10: a lithium ion battery comprising a separator, wherein the separator comprises a layer of the composite material particles of any one clause of clauses 1, 1A-1H, 2, 2A-2H, 3, 3A-3H, 4, 4A-4H, 5, 5A-5H, 6, 6A-6H, 7, 7A-7H, 8, and 8A-8G.

## Claims

1. A composite material particle comprising a boehmite core and first shell comprising at least one of TiO₂, SiO₂, ZiO₂, spinels, MgAl₂O₄, perovskites, CaTiO₃, ABO₃ where A and B are two different cations, garnets, minerals comprising the formula X₃Y₂(SiO₄)₃ where X is a divalent cation M²⁺ (M = Ca, Mg, Fe, or Mn) and Y is a trivalent cation M³⁺ (M = Al, Fe, or Cr), alumina, d-alumina, g-alumina, a binary sulfide, Bi₂S₃, Cu₂₋ₓS (0 < x < 1), PbS, TiS₂, Ag₂S, a selenide, a telluride, binary nitride, a sulfur nitride, a boron nitrite, a triphosphorous pentanitride, a silicon nitride, a titanium nitride, a zinc nitride, an aluminum nitride, a binary oxynitride, a sulfur oxynitride, a silicon oxynitride, a titanium oxynitride, a zinc oxynitride, an aluminum oxynitride, silicon carbide, titanium carbide, a transition metal boride, a heavy metal boride, WB₄, AlB₂, TiB₂, titanium diboride, iron boride, mono-phosphates, and poly-phosphates.

2. The composite material particle of claim 1, wherein the smallest particle dimension value of the boehmite core is between 40 nanometers and 25 micrometers and wherein the largest particle dimension value of the boehmite core is between 40 nanometers and 400 micrometers.

3. The composite material particle of claim 1, wherein the thickness of the first shell is between 0.5 nanometers and 2 micrometers.

4. The composite material particle of claim 1, further comprising a second shell completely or partially surrounding the first shell, wherein the second shell comprises at least one of a surfactant, a monosaccharide, a disaccharide, a sugar acid, an amino sugar, a deoxy sugar, a polyols sugar alcohol, and a methylcellulose.

5. The composite material particle of claim 4, wherein the thickness of the second shell is between 0.5 nanometers and 2 micrometers.

6. The composite material particle of claim 1, further comprising a second shell completely or partially surrounding the first shell, wherein the second shell comprises at least one of alkylbenzene sulfonic acid, d-glucose, 3-o-methyl-d-glucose, d-fructose, 1-o-methyl-d-fructose, 3-o-methyl-d-fructose, saccharose, turanose, maltose, galacturonic acid, lactobionic acid, 1-ascorbic acid, glucosamine, galactosamine, deoxyribose, fuculose, xylitol, mannitol, sorbitol, methylcellulose, catboxymethylcellulose, acrylic acid, and ethylene oxide.

7. The composite material particle of claim 6, wherein the thickness of the second shell is between 0.5 nanometers and 2 micrometers.

8. A separator for a lithium ion battery comprising a layer of composite material particles, wherein the composite material particles comprise a boehmite core and a first shell, wherein the shell comprises at least one of TiO₂, SiO₂, ZiO₂, spinels, MgAl₂O₄, perovskites, CaTiO₃, ABO₃ where A and B are two different cations, garnets, minerals comprising the formula X₃Y₂(SiO₄)₃ where X is a divalent cation M²⁺ (M = Ca, Mg, Fe, or Mn) and Y is a trivalent cation M³⁺ (M = Al, Fe, or Cr), alumina, d-alumina, g-alumina, a binary sulfide, Bi₂S₃, Cu₂₋ₓS (0 < x < 1), PbS, TiS₂, Ag₂S, a selenide, a telluride, binary nitride, a sulfur nitride, a boron nitrite, a triphosphorous pentanitride, a silicon nitride, a titanium nitride, a zinc nitride, an aluminum nitride, a binary oxynitride, a sulfur oxynitride, a silicon oxynitride, a titanium oxynitride, a zinc oxynitride, an aluminum oxynitride, silicon carbide, titanium carbide, a transition metal boride, a heavy metal boride, WB₄, AlB₂, TiB₂, titanium diboride, iron boride, mono-phosphates, and poly-phosphates.

9. The separator of claim 8, wherein the smallest particle dimension of the boehmite ceramic core is between 40 nanometers and 25 micrometers and wherein the largest particle dimension value of the boehmite core is between 40 nanometers and 400 micrometers.

10. The separator of claim 8, wherein the thickness of the first shell is between 0.5 nanometers and 2 micrometers.

11. The separator of claim 8, further comprising a second shell completely or partially surrounding the first shell, wherein the second shell comprises at least one of a surfactant, a monosaccharide, a disaccharide, a sugar acid, an amino sugar, a deoxy sugar, a polyols sugar alcohol, and a methylcellulose.

12. The separator of claim 11, wherein the thickness of the second shell is between 0.5 nanometers and 2 micrometers.

13. The separator of claim 8, further comprising a second shell completely or partially surrounding the first shell, wherein the second shell comprises at least one of alkylbenzene sulfonic acid, d-glucose, 3-o-methyl-d-glucose, d-fructose, 1-o-methyl-d-fructose, 3-o-methyl-d-fructose, saccharose, turanose, maltose, galacturonic acid, lactobionic acid, 1-ascorbic acid, glucosamine, galactosamine, deoxyribose, fuculose, xylitol, mannitol, sorbitol, methylcellulose, catboxymethylcellulose, acrylic acid, and ethylene oxide.

14. The separator of claim 13, wherein the thickness of the second shell is between 0.5 nanometers and 2 micrometers.

15. A lithium ion battery comprising a separator, wherein the separator comprises a layer of composite material particles, wherein the composite material particles comprise a boehmite core and a first shell, wherein the shell comprises at least one of TiO₂, SiO₂, ZiO₂, spinels, MgAl₂O₄, perovskites, CaTiO₃, ABO₃ where A and B are two different cations, garnets, minerals comprising the formula X₃Y₂(SiO₄)₃ where X is a divalent cation M³⁺ (M = Ca, Mg, Fe, or Mn) and Y is a trivalent cation M³⁺ (M = Al, Fe, or Cr), alumina, d-alumina, g-alumina, a binary sulfide, Bi₂S₃, Cu₂₋ₓS (0 < x < 1), PbS, TiS₂, Ag₂S, a selenide, a telluride, binary nitride, a sulfur nitride, a boron nitrite, a triphosphorous pentanitride, a silicon nitride, a titanium nitride, a zinc nitride, an aluminum nitride, a binary oxynitride, a sulfur oxynitride, a silicon oxynitride, a titanium oxynitride, a zinc oxynitride, an aluminum oxynitride, silicon carbide, titanium carbide, a transition metal boride, a heavy metal boride, WB₄, AlB₂, TiB₂, titanium diboride, iron boride, mono-phosphates, and poly-phosphates.
